# EUROPÄISCHE PATENTSCHRIFT

(11) **EP 0 950 577 B1**
(45) Veröffentlichungstag und Bekanntmachung des Hinweises auf die Patenterteilung: **26.02.2003**
(21) Anmeldenummer: 99104032.0
(22) Anmeldetag: 15.03.1999
(51) Int. Cl.: B60R 21/20

(54) **Lenkrad mit Airbag**
Steering wheel with airbag
Volant de direction avec sac gonflable

(30) Priorität: 18.04.1998 DE 19817349
(43) Veröffentlichungstag der Anmeldung: 20.10.1999
(73) Patentinhaber: Volkswagen Aktiengesellschaft, 38436 Wolfsburg (DE)
(72) Erfinder: Andronis, Odysseus, 38100 Braunschweig (DE)
(74) Vertreter: Neubauer, Hans-Jürgen, Dipl.-Phys.

(56) Entgegenhaltungen:
- EP-A1- 0 796 770
- EP-A1- 0 808 750
- WO-A1-92/02387
- DE-A1- 3 717 002
- DE-A1- 4 415 765
- DE-A1- 4 423 963
- DE-A1- 19 521 937
- GB-A- 2 242 871

## Beschreibung

Die Erfindung betrifft ein Lenkrad nach dem Oberbegriff des Anspruchs 1.

Ein bekanntes, gattungsgemäßes Lenkrad (DE 195 21 937 A1) besteht aus einem zentralen Topfteil zur Aufnahme von Airbagfunktionselementen und zum Anschluss an eine Lenksäule, aus am Topfteil angeschlossenen Rasspeichen und aus einem diese umgebenden Radkranz.

Es handelt sich hier um eine sog. Skelettbauweise, bei der ein Metallkern einteilig aus einer Magnesiumlegierung im Spritzgussverfahren hergestellt ist. Das Metallkernteil umfasst Bereiche des zentralen Topfteils sowie die Innenstruktur des Radkranzes und der Radspeichen und ist zur Bildung des fertigen Radkranzes sowie der Radspeichen in diesen Bereichen eingeschäumt. Zudem ist an den Außenflächen des zentralen Topfteils eine Verkleidung angebracht.

Bei dieser Skelettbauweise des Lenkrads wird somit durch das einstückige Metallkernteil lediglich eine steife Tragestruktur zur Verfügung gestellt, die zur Herstellung eines fertigen Lenkrads in aufwendigen, weiteren Herstellungs- und Montageschritten umschäumt und verkleidet werden muss. Daraus folgt, dass alle metallischen Oberflächen des Metallkernteils abgedeckt und nicht sichtbar sind.

Eine aufreißbare Abdeckung eines im zentralen Topfteil angebrachten Airbagmoduls liegt hier etwa in der Radkranzebene. Beim Auslösen des Airbags und Aufreißen der Abdeckung steht diese somit ungünstig aus der Radkranzebene in Richtung auf einen Fahrzeuglenker vor, wodurch dieser durch eine Kollision mit der Abdeckung beeinträchtigt sein kann.

Bei einem ähnlichen Lenkrad mit einem einstückigen Lenkradskelett (DE 44 15 765 C2) ist ein Airbagmodul bestehend aus einem Gasgenerator, einem Diffusor und einem Gassack von vorne in ein zentrales Topfteil eingesetzt und unmittelbar am Lenkradskelett befestigt sowie durch eine Abdeckung abgedeckt. Auch hier ist eine aufwendige Umschäumung und Abdeckung des Lenkradskeletts erforderlich.

Weiter ist die Herstellung eines anschließend umschäumbaren Lenkradskeletts durch Aluminium-Druckguss bekannt (DE 37 17 002 A1)

Zudem sind umschäumte Lenkräder bekannt (DE 44 23 963 A1; EP 0 796 770 A1), deren zentrales Nabenteil ein Airbagmodul enthält, das von der Rückseite her bzw. der Lenksäulenseite her in das Nabenteil eingesetzt ist. Dazu ist das Nabenteil mehrteilig, insbesondere mit einem separaten Lenksäulenanschlussteil ausgebildet, was ungünstig die Herstellungskosten, die Teilevielfalt und den Montageaufwand erhöht.

Aus der gattungsgemäßen EP 808 750 ist ein Lenkrad mit einem zentralen Topfteil zur Aufnahme von Airbagfunktionselementen und zum Anschluss an eine Lenksäule mit am Topfteil angeschlossenen Radspeichen und mit einem diese umgebenden Radkranz bekannt, wobei das an die Lenksäule angeschlossene Lenkrad ein einstückig aus Leichtmetall gegossenes Integralteil ist, das das Topfteil, die Radspeichen und den Radkranz aufweist.

Konkret bilden hier das Topfteil, die Radspeichen und der Radkranz einen Lenkradgrundkörper aus, der mit einer durchgehenden Kunststoff-Verkleidung überzogen ist, um eine gleichmäßig strukturierte Oberfläche ohne unansehnliche Spalten und Übergänge zwischen den einzelnen Bauteilen des Lenkradgrundkörpers zu erhalten. Eine derartige Kunststoff-Verkleidung vermittelt insbesondere in Verbindung mit hochwertigen Fahrzeug-Innenraumausstattungen einen oftmals unerwünschten qualitativ minderwertigen Gesamteindruck. Zudem ist eine derartige Kunststoff-Verkleidung relativ materialaufwendig und erfordert einen erhöhten Montageaufwand.

Alle vorstehend genannten Lenkräder vermitteln somit aufgrund der Kunststoffumschäumungen und Kunststoffabdeckungen an ihren Oberflächen etwa den gleichen optischen Eindruck. Ein Fahrzeugkäufer oder Fahrzeugbenutzer erhält keinen Hinweis darauf, dass gerade bei Lenkrädern eine Gewichtsreduzierung in Verbindung mit hoher Stabilität und Funktionalität bei einem Fahrzeugaufprall wesentlich ist und obwohl dazu für die Lenkradskelette hochwertige Leichtmetalle verwendet werden.

Der EP 0926038 liegt die Aufgabe zugrunde, ein Lenkrad zu schaffen, das in einfacher Weise eine genauere Einstellung des Lenkrad-Trägheitsmomentes um die Lenkradachse ermöglicht. Dazu werden in Ausnehmungen am Lenkrad Zusatzmassen eingebracht. Anschließend wird dann das Lenkrad mittels einem Verkleidungsteil verkleidet.

Aufgabe der Erfindung ist es daher, ein gattungsgemäßes Lenkrad so weiterzubilden, dass mit diesem ein optisch ansprechender, qualitativ hochwertiger Gesamteindruck vermittelt werden kann und zudem die Herstellungs- und Montagekosten reduziert werden können.

Diese Aufgabe wird gelöst mit den Merkmalen des Anspruchs 1.

Gemäß Anspruch 1 weist das Lenkrad als Vollmetall-Lenkrad zumindest an den Außenflächen des Topfteils und der Radspeichen metallische Sichtflächen auf, die weitgehend nicht umschäumt oder abgedeckt sind.

Die Leichtmetallsichtflächen vermitteln insbesondere in Verbindung mit hochwertigen Fahrzeuginnenraumausstattungen einen ansprechenden, hochwertigen qualitativen Gesamteindruck. Zudem erfolgt hierbei eine vorteilhafte Visualisierung der eingesetzten Leichtbautechnik mit hochwertigen Leichtmetallen. Durch den einstückigen Aufbau und den zumindest weitgehenden Wegfall von Umschäumungen oder Abdeckungen ist zudem eine preis- und gewichtsgünstige Herstellung möglich. Zudem ist durch den einstückigen Aufbau auch die Montage vereinfacht.

Das Lenkrad als Integralteil kann beispielsweise aus einer Aluminiumlegierung in einem Aluminiumdruckgussverfahren hergestellt sein. Bevorzugt werden hier jedoch zur Herstellung des Lenkrads als Integralteil eine Magnesiumlegierung in Verbindung mir einem Magnesiumdruckgussverfahren verwendet.

Das Topfteil kann auch bei der vorliegenden Ausführung in an sich bekannter Weise als Sicherheitselement in Form eines Pralltopfs, vorzugsweise als Stülptopf ausgebildet sein. Damit sind bereits Sicherheitsmaßnahmen unmittelbar im einstückigen Lenkrad integriert.

Zweckmäßig wird die Radkranzoberfläche zur Verbesserung des Griffkontakts mit einer rauhen Oberfläche versehen. Dies kann mit unterschiedlichen Maßnahmen erreicht werden:

Eine raue Oberflächenstruktur, bevorzugt eine Noppenstruktur aus einem Kunststoffmaterial oder Gummimaterial kann mit an sich bekannten Maßnahmen aufgeschäumt und/oder aufgespitzt und/oder aufgesteckt werden. Beispielsweise können dazu einzelne, beabstandete Noppen an der Radkranzoberfläche angebracht werden, so dass auch dort zwischen den Noppen Metallflächen sichtbar sind. Es ist auch eine durchgehende Fläche mit rauer Oberflächenstruktur an der Radkranzoberfläche möglich.

Insbesondere können dazu vorteilhaft zwei aufsteckbare und gegeneinander und/oder an den Radspeichen verklipsbare Schalenteile verwendet werden, die an ihrer Außenseite die rauhe Oberflächenstruktur aufweisen. Eine solche Ausbildung ist einfach und kostengünstig herstellbar. Die Schalenteile sind dabei in Farbe und Gestalt individuellen Erfordernissen und Wünschen einfach anpassbar.

Die Kranzoberfläche kann auch in an sich bekannter Weise mit einem Lederüberzug versehen werden.

Das zentrale Topfteil ist nach vorne offen und dadurch bequem in Vorderladertechnik mit einzelnen Airbagfunktionselementen oder einem gesamten Airbagmodul bestehend aus einem Gasgenerator, einem Diffusor und einem Gassack bestückbar. Ein Austausch dieser Elemente ist bei geeigneter Ausführung und Anschlusstechnik ohne Demontage des Lenkrads möglich. Eine Abdeckung kann bevorzugt als aufklappbares Deckelteil einfach an der Öffnung des Topfteils angebracht werden. Der Diffusor wird vorzugsweise am Integralteil mit angeformt.

In einer weiterführenden Ausbildung wird vorgeschlagen, den Abstand zwischen der Radkranzebene und der Airbagabdeckung so groß zu dimensionieren, daß die Abdeckung beispielsweise als aufklappbares Deckelteil nach einer Airbagauslösung im Bereich zwischen der Radkranzebene und dem Topfteil verbleibt. Eine solche Anordnung kann durch ein relativ langes Topfteil und/oder durch längere, steil angestellte Radspeichen erreicht werden. Damit wird vorteilhaft eine Kollision eines Fahrzeuglenkers mit einer aufgeklappten Abdeckung nach einer Airbagauslösung vermieden.

Anhand einer Zeichnung wird die Erfindung näher erläutert.

Es zeigen:
- Fig. 1: eine schematische Darstellung einer ersten Ausführungsform eines Vollmetall-Lenkrads, und
- Fig. 2: eine schematische Darstellung einer zweiten Ausführungsform eines Vollmetall-Lenkrads.

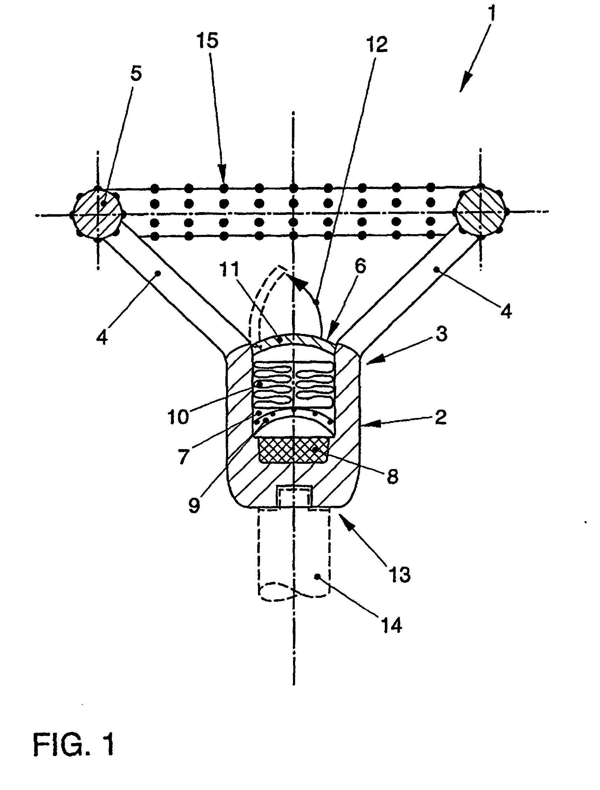

In der Fig. 1 ist ein Schnitt durch ein Vollmetall-Lenkrad 1 schematisch dargestellt. Das Vollmetall-Lenkrad 1 ist als ein einstückig aus einer Magnesiumlegierung im Magnesiumdruckgußverfahren gegossenes Integralteil hergestellt. Dadurch weist das Lenkrad 1 optisch ansprechende, metallische Sichtflächen auf, d.h. ist ohne die üblichen Umschäumungen und Abdeckungen ausgeführt. Alternativ kann das Lenkrad 1 aber auch aus einer Aluminiumlegierung in einem Aluminiumdruckgußverfahren hergestellt sein.

Das Lenkrad 1 besteht aus einem zentralen Topfteil 2, an dessen oberem Topfende 3 Radspeichen 4 angegossen sind. Diese Radspeichen 4 sind von einem Radkranz 5 umgeben und stehen von dem oberen Topfende 3 in etwa in einem 45° Winkel steil ab.

Das Topfteil 2 weist am oberen Topfende 3 eine Topföffnung 6 auf, die sich zu einem Topfaufnahmeraum 7 erweitert. In diesem Topfaufnahmeraum 7 sind ein Gasgenerator 8, ein Diffusor 9 und ein Gassack 10 als Airbagfunktionselemente aufgenommen.

Der Diffusor 9 ist dabei über dem Gasgenerator 8 am unteren Ende des Topfaufnahmeraums 7 am Topfteil 2 angeformt. Die Topföffnung 6 ist durch eine Abdeckung 11 abgedeckt, die am oberen Topfende 3 randseitig angelenkt ist.

Wie dies in der Fig. 1 mit dem Pfeil 12 dargestellt ist, ist der Abstand zwischen der Radkranzebene und der Abdeckung 11 so dimensioniert, daß die Abdeckung 11 nach einer Airbagauslösung im Bereich zwischen der Radkranzebene und dem Topfteil 2 verbleibt. Damit kann eine Kollision eines Fahrzeuglenkers mit der in der Fig. 1 strichliert eingezeichneten, aufgeklappten Abdeckung 11 nach einer Airbagauslösung vermieden werden.

Das Lenkrad 1 ist ferner über ein unteres Topfende 13 des Topfteils 2 an eine in der Fig. 1 lediglich strichliert eingezeichnete Lenksäule 14 angeschlossen.

Wie dies aus der Fig. 1 weiter ersichtlich ist, ist auf die Oberfläche des Radkranzes 5 eine Noppenstruktur 15 aus einem Kunststoffmaterial oder einem Gummimaterial aufgeschäumt.

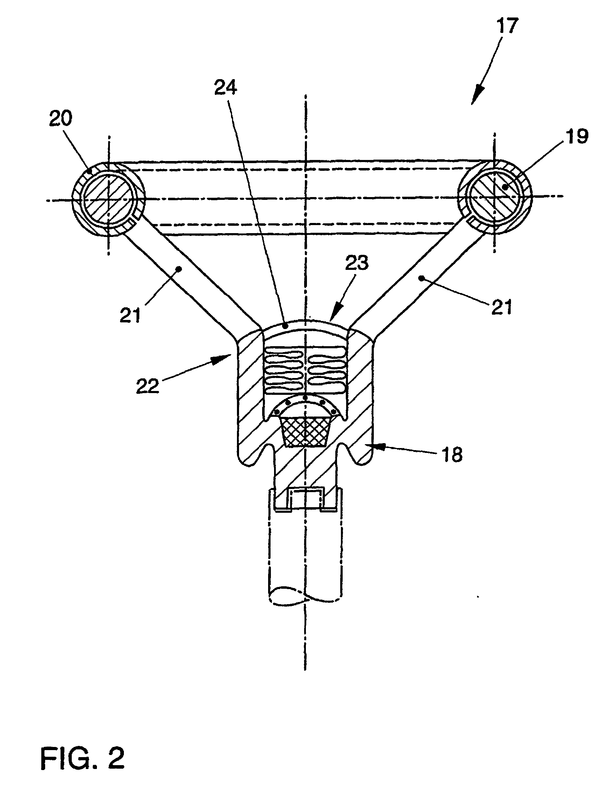

In der Fig. 2 ist eine alternative Ausführungsform eines Vollmetall-Lenkrads 17 mit im wesentlichen gleichen Aufbau dargestellt. Das Topfteil 18 des Vollmetall-Lenkrads 17 ist hier als Sicherheitselement in der Form eines Stülptopfs ausgebildet. Damit ist zusätzlich zu der Anordnung der Airbagfunktionselemente eine weitere Sicherheitsmaßnahme unmittelbar im Lenkrad 17 integriert

Auf den Radkranz 19 sind zwei Schalenteile 20 aufgeklipst, von denen in der Fig. 2 lediglich eines dargestellt ist. Die Schalenteile 20 weisen an ihrer Außenseite eine rauhe Oberflächenstruktur auf und sind in Farbe und Gestalt individuellen Erfordernissen und Wünschen einfach anpaßbar.

Auch hier stehen die Radspeichen 21 wiederum steil von einem oberen Topfende 22 des Topfteils 18 ab. Dadurch verbleibt eine die Topföffnung 23 verschließende und am oberen Topfende 22 angelenkte Abdeckung 24 im Bereich zwischen der Radkranzebene und dem Topfteil 18, wodurch eine Kollision mit einem Fahrzeuglenker nach einer Airbagauslösung vermieden wird.

## Patentansprüche

1. Lenkrad mit einem zentralen Topfteil (2; 18) zur Aufnahme von Airbagfunktionselementen und zum Anschluss an eine Lenksäule (14), mit am Topfteil (2; 18) angeschlossenen Radspeichen (4; 21) und mit einem diese umgebenden Radkranz (5; 19), wobei das an die Lenksäule (14) angeschlossene Lenkrad (1; 17) ein einstückig aus Leichtmetall gegossenes Integralteil ist, das das Topfteil (2; 18), die Radspeichen (4; 21) und den Radkranz (5; 19) aufweist,
**dadurch gekennzeichnet,**
**dass** das Lenkrad als Vollmetall-Lenkrad (1; 17) zumindest an den Außenflächen des Topfteils (2; 18) und der Radspeichen (4; 21) metallische Sichtflächen aufweist, die weitgehend nicht umschäumt oder abgedeckt sind.

2. Lenkrad nach Anspruch 1, **dadurch gekennzeichnet, daß** das Lenkrad (1; 17) als Integralteil im Magnesiumdruckgußverfahren hergestellt ist.

3. Lenkrad nach Anspruch 1 oder Anspruch 2, **dadurch gekennzeichnet, daß** das Topfteil (2; 18) als Sicherheitselement in der Form eines Pralltopfs, vorzugsweise als Stülptopf ausgebildet ist.

4. Lenkrad nach einem der Ansprüche 1 bis 3, **dadurch gekennzeichnet, daß** die Radkranzoberfläche zumindest teilweise eine rauhe Oberfläche als Grifffläche aufweist.

5. Lenkrad nach Anspruch 4, **dadurch gekennzeichnet, daß** auf die Radkranzoberfläche eine rauhe Oberflächenstruktur, bevorzugt eine Noppenstruktur (15) aus einem Kunststoffmaterial oder Gummimaterial aufgeschäumt und/oder aufgespritzt und/oder aufgesteckt ist

6. Lenkrad nach Anspruch 4, **dadurch gekennzeichnet, daß** die Oberflächenstruktur aus zwei aufsteckbaren und gegeneinander und/oder am Radkranz (5; 19) und/oder an den Radspeichen (4; 21) verklipsbaren Schalenteilen (20) gebildet ist

7. Lenkrad nach Anspruch 4, **dadurch gekennzeichnet, daß** die Kranzoberfläche zumindest teilweise mit einem Lederüberzug überzogen ist.

8. Lenkrad nach einem der Ansprüche 1 bis 7, **dadurch gekennzeichnet, daß** das Topfteil (2; 18) von vorne in Vorderladertechnik mit Airbagfunktionselementen, insbesondere mit einem Gasgenerator (8), einem Diffusor (9), einem Gassack (10) und einer Abdeckung (11; 24) bestückbar ist, wobei der Diffusor (9) bevorzugt am Integralteil angeformt ist.

9. Lenkrad nach Anspruch 8, **dadurch gekennzeichnet, daß** der Abstand zwischen der Radkranzebene und der Abdeckung (11; 24) so groß dimensioniert ist, daß die Ab-. deckung (11; 24) in der geöffneten und dabei am Topfteil (2; 18) gehaltene Position im Bereich zwischen der Radkranzebene und dem Topfteil (2; 18) verbleibt.

## Claims

1. Steering wheel with a central bowl part (2; 18) for the reception of airbag operating elements and for connection to a steering column (14), with wheel spokes (4; 21) connected to the bowl part (2; 18), and with a wheel rim (5; 19) surrounding the said wheel spokes, the steering wheel (1; 17) connected to the steering column (14) being an integral part which is cast in one piece from light metal and which has the bowl part (2; 18), the wheel spokes (4; 21) and the wheel rim (5; 19), **characterized in that** the steering wheel, as an all-metal steering wheel (1; 17), has, at least on the outer faces of the bowl part (2; 18) and of the wheel spokes (4; 21), metallic visible faces which are largely not surrounded by foam or covered.

2. Steering wheel according to Claim 1, **characterized in that** the steering wheel (1; 17) is produced as an integral part by the magnesium die-casting method.

3. Steering wheel according to Claim 1 or Claim 2, **characterized in that** the bowl part (2; 18) is designed as a safety element in the form of an impact bowl, preferably as a reversible bowl.

4. Steering wheel according to one of Claims 1 to 3, **characterized in that** the wheel-rim surface has at least partially a rough surface as a gripping face.

5. Steering wheel according to Claim 4, **characterized in that** a rough surface structure, preferably a knobby structure (15) consisting of a plastic material or rubber material, is foamed and/or injected and/or slipped onto the wheel-rim surface.

6. Steering wheel according to Claim 4, **characterized in that** the surface structure is formed from two shell parts (20) capable of being slipped on and of being snapped relative to one another and/or on the wheel rim (5; 19) and/or on the wheel spokes (4; 21).

7. Steering wheel according to Claim 4, **characterized in that** the rim surface is covered at least partially with a leather covering.

8. Steering wheel according to one of Claims 1 to 7, **characterized in that** the bowl part (2; 18) is capable of being equipped from the front by the front-loader technique with airbag operating elements, in particular with a gas generator (8), a diffuser (9), a gas bag (10) and a cover (11; 24), the diffuser (9) preferably being integrally formed on the integral part.

9. Steering wheel according to Claim 8, **characterized in that** the distance between the wheel-rim plane and the cover (11; 24) is dimensioned such that the cover (11; 24), in the open position at the same time held on the bowl part (2; 18), remains in the region between the wheel-rim plane and the bowl part (2; 18).

## Revendications

1. Volant de direction avec un gobelet central (2 ; 18) destiné à recevoir des éléments fonctionnels de sac gonflable et à être raccordé à une colonne de direction (14), avec des rayons (4 ; 21) raccordés au gobelet (2 ; 18) et avec une couronne (5 ; 19) entourant ceux-ci, dans lequel le volant de direction (1 ; 17) raccordé à la colonne de direction (14) est une pièce intégrale coulée d'un seul tenant en métal léger, qui présente le gobelet (2 ; 18), les rayons (4 ; 21) et la couronne (5 ; 19), **caractérisé en ce que** le volant de direction sous forme de volant de direction en métal plein (1 ; 17) présente des surfaces métalliques visibles sur les faces extérieures du gobelet (2 ; 18) et des rayons (4 ; 21), qui ne sont dans une large mesure pas enrobées de mousse ni masquées.

2. Volant de direction suivant la revendication 1, **caractérisé en ce que** le volant de direction (1 ; 17) est une pièce intégrale fabriquée par le procédé de coulée sous pression de magnésium.

3. Volant de direction suivant la revendication 1 ou la revendication 2, **caractérisé en ce que** le gobelet (2 ; 18) se présente comme un élément de sécurité sous la forme d'un gobelet anti-chocs, de préférence un gobelet télescopique.

4. Volant de direction suivant l'une quelconque des revendications 1 à 3, **caractérisé en ce que** la surface de la couronne présente au moins en partie une surface rugueuse comme surface de prise.

5. Volant de direction suivant la revendication 4, **caractérisé en ce qu'**une structure de surface rugueuse, de préférence une structure avec des aspérités (15) en matière plastique ou en matière caoutchouteuse, est déposée sous forme de mousse et/ou par projection et/ou par enfilage sur la surface de la couronne.

6. Volant de direction suivant la revendication 4, **caractérisé en ce que** la structure de surface est formée de deux parties de coquille (20) à enfiler et à clipser l'une à l'autre et/ou sur la couronne (5 ; 19) et/ou sur les rayons (4 ; 21).

7. Volant de direction suivant la revendication 4, **caractérisé en ce que** la surface de la couronne est revêtue au moins en partie d'une garniture de cuir.

8. Volant de direction suivant l'une quelconque des revendications 1 à 7, **caractérisé en ce que** le gobelet (2 ; 18) peut être équipé par l'avant, selon la technique de chargement par l'avant, d'éléments fonctionnels de sac gonflable, en particulier d'un générateur de gaz (8), d'un diffuseur (9), d'une poche à gaz (10) et d'un couvercle (11 ; 24), le diffuseur (9) étant de préférence façonné sur la pièce intégrale.

9. Volant de direction suivant la revendication 8, **caractérisé en ce que** la distance entre le plan de la couronne et le couvercle (11 ; 24) est dimensionnée de telle manière que, dans sa position ouverte et en l'espèce maintenue sur le gobelet (2 ; 18), le couvercle (11 ; 24) reste dans la région comprise entre le plan de la couronne et le gobelet (2 ; 18).
